# EUROPÄISCHE PATENTSCHRIFT

(11) **EP 0 849 232 B1**
(45) Veröffentlichungstag und Bekanntmachung des Hinweises auf die Patenterteilung: **26.05.1999**
(21) Anmeldenummer: 96402772.6
(22) Anmeldetag: 17.12.1996
(51) Int. Cl.: C03B 37/029, C03B 37/027

(54) **Verfahren und Vorrichtung zum Ziehen einer optischen Faser aus einer Vorform**
Process and apparatus for drawing an optical fibre from a preform
Procédé et appareil de l'étirage d'une fibre optique à partir d'une préforme

(43) Veröffentlichungstag der Anmeldung: 24.06.1998
(73) Patentinhaber: ALCATEL, 75008 Paris (FR)
(72) Erfinder: Lysson, Hans-Jürgen, 41352 Korschenbroich (DE); Dieumegard, Anne, 59263 Houplin Ancoisne (FR); Mairesse, Arnaud, 59000 Lille (FR)
(74) Vertreter: Mende, Eberhard, Dipl.-Ing.

(56) Entgegenhaltungen:
- EP-A- 0 321 182
- EP-A- 0 653 383
- US-A- 4 154 592
- PATENT ABSTRACTS OF JAPAN vol. 18, no. 371 (C-1224), 13.Juli 1994 & JP 06 100328 A (FURUKAWA ELECTRIC CO., LTD.), 12.April 1994,
- PATENT ABSTRACTS OF JAPAN vol. 9, no. 21 (C-263), 29.Januar 1985 & JP 59 169951 A (NT&T CORP.), 26.September 1984,
- PATENT ABSTRACTS OF JAPAN vol. 10, no. 36 (C-328), 13.Februar 1986 & JP 60 186426 A (NT&T CORP.), 21.September 1985,
- PATENT ABSTRACTS OF JAPAN vol. 18, no. 61 (C-1160), 2.Februar 1994 & JP 05 279070 A (FUJIKURA LTD.), 26.Oktober 1993,

## Beschreibung

Die vorliegende Erfindung betrifft ein Verfahren zum Ziehen einer optischen Faser aus dem Ende einer mindestens in diesem Bereich über die Glaserweichungstemperatur erwärmten Glasvorform, wobei die Vorform während des Ziehvorganges und Nachführens in einem Ofenraum von einem Gas umströmt wird.

Bei einem der Verfahren der gattungsgemäßen Art (EP-A1-0 653 383) beispielsweise wird die Vorform von einem Gas umströmt, dessen Strömungsrichtung der Faserziehrichtung entspricht und bei dem die Strömung des die Vorform umgebenden Gases im Ziehbereich durch ein zusätzliches Spülgas stabilisiert wird. Damit werden Gasturbulenzen im Ofeninnenraum ausgeschaltet bzw. deren Einfluß auf ein für die Qualität der aus der Vorform gezogenen optischen Fasern unerhebliches Maß beschränkt.

Zur Verbesserung der Faserqualität und insbesondere zur Vermeidung von Durchmesserschwankungen hat man auch bereits zumindest während eines Teiles des Ziehvorganges ein Helium enthaltendes Gas in einer Abwärtsströmung durch den Ziehofen geleitet (DE-OS 29 06 071). Das geschieht hierbei in der Weise, daß zuerst ein heliumfreies Gas in Ziehrichtung durch den Ofen geleitet wird, bis die Länge des Rohlings nur noch etwa 10 cm beträgt und anschließend ein heliumhaltiges Gas. Wenn auch wegen der gegenüber anderen Schutzgasen höheren Wärmeleitfähigkeit sowie geringeren Wärmekapazität von Helium Gasturbulenzen im Ofenraum reduziert werden können, bedeutet die bekannte Maßnahme jedoch einen erheblichen steuerungstechnischen Aufwand und Unsicherheiten in der Faserqualität beim Gaswechsel. Das gilt vor allem aufgrund immer weiter gehender Forderungen nach höheren Fertigungsgeschwindigkeiten und strengeren Spezifikationen für die Faserdurchmesser. Bisherige Forderungen nach Faserdurchmessern von 125 µm und einer zulässigen Schwankungsbreite von ± 2 µm stehen Schwankungsbreiten von nur noch ± 1,0 µm basierend auf online-Messungen mit hoher Frequenz zur Diskussion.

Hinzukommt, daß mehr Wirtschaftlichkeit der Ziehverfahren bei verbesserter Faserqualität gefordert wird, Forderungen, die sich mit dem letztgenannten Verfahren nicht erreichen lassen. So ist im einführungsseitigen Bereich des Ziehofens stets mit erhöhten Leckagen zu rechnen, ein hoher Verlust an Helium ist die Folge dann, wenn, wie wegen der Vermeidung von Durchmesserschwankungen gefordert, hoch heliumhaltiges Gas von oben nach unten zum Ziehbereich hin das Ofeninnere durchströmen soll.

Bekannt ist es in diesem Zusammenhang auch (EP 0 321 182 A2), beim Ziehen optischer Fasern aus einer erwärmten Glasvorform Stickstoff oder Helium an zwei unterschiedlichen Stellen des Ofens zur Reinigung des Ofeninnenraumes in diesen einzuführen. Dabei hat man bereits daran gedacht (JP-A-59169951), zur Reinhaltung des Ofeninnenraumes ein Helium/Argon Gemisch einzuführen.

Ausgehend von diesem Stand der Technik liegt daher der Erfindung die Aufgabe zugrunde, eine Möglichkeit zu finden, trotz höherer Ziehgeschwindigkeiten die Faserqualität zu verbessern sowie die engen Toleranzen im Zusammenhang mit den Faserabmessungen zu gewährleisten. Darüberhinaus soll sichergestellt sein, daß die Leckagen an Helium auf ein kostenmäßig erträgliches Maß gesenkt werden.

Gelöst wird diese Aufgabe gemäß der Erfindung dadurch, daß die sich an das ziehseitige Ende anschließenden Bereiche der Vorform während des Nachführens Gaszonen mit in Ziehrichtung ansteigendem Heliumgehalt des Ofengases durchlaufen. Im Gegensatz zum bekannten Verfahren mit in Abhängigkeit von den äußeren Abmessungen ständig verändertem Heliumdurchfluß sieht die Erfindung eine über den gesamten Ziehprozeß gleichbleibende Grundeinstellung der Heliumkonzentration vor. Das führt zu einer Qualitätssteigerung der gezogenen Ader sowie zu einer wesentlichen Turbulenzberuhigung der im Ofeninnenraum geführten Schutzgase über die gesamte Länge.

Die nach der Erfindung gewählte Grundeinstellung hat noch besondere Vorteile dann, wenn der Heliumgehalt des in den Ofenraum einströmenden Gases in den Zuführungsbereichen in Ziehrichtung von weniger als 30 % auf mehr als 60 % ansteigt. Bei beispielsweise 15 % Heliumanteil, Rest Argon wirkt das Argon als Puffergas im oberen Ofenbereich bei vernachlässigbarer He-Leckage, während im Ziehzwiebelbereich beispielsweise ein Anteil von 70 % Helium, bezogen auf das Ofengasvolumen, ohne He-Leckagen zur Qualitätsverbesserung der Faser und zu konstanten Faserabmessungen führt.

Die prozentuale Differenz des Heliumgehaltes im Ofengas im oberen und unteren Ofenraum läßt sich unter Reduzierung der He-Leckagen weiter steigern, wenn nach einem weiteren Erfindungsgedanken der Heliumgehalt des in den Ofenraum einströmenden Gases in den Zuführungsbereichen von weniger als 15 % auf mehr als 85 % ansteigt. Der Heliumgehalt am gesamten, die Vorform während des Ziehprozesses umgebenden Ofengas beträgt vorzugsweise weniger als 30 %.

Das für die Zwecke der Erfindung verwendete Ofen- oder Spülgas kann in Verbindung mit bekannten anderen Schutzgasen, wie Argon, Stickstoff o.ä. verwendet werden. Wesentlich zur Vermeidung von kostenaufwendigen Leckagen ist, daß am einführungsseitigen Ende des Ofens dem zugeführten Spülgas nur geringe Anteile Helium zugesetzt sind, der überragende Anteil Schutzgas also die Funktion eines Puffergases zur Vermeidung von He-Leckagen in diesem Bereich übernimmt. Insofern kann es mitunter von Vorteil sein, im oberen Ofenbereich überhaupt auf die Zufuhr von He-Anteilen zu verzichten.

Eine besonders vorteilhafte Variante der erfindungsgemäßen Lösung besteht darin, daß in das einführungsseitige Ende des Ofenraumes zwischen 2 und 5 l/min Argon sowie 0,3 bis 1,3 l/min Helium und am ausgangsseitigen 0 bis 0,2 l /min Argon sowie zwischen 0,25 und 0,7 l/min Helium eingebracht werden. Mit dieser Grundeinstellung der Durchflüsse sind die gestellten Forderungen, niedriger Heliumverbrauch, gute Faserqualität und konstante Faserabmessungen unter Berücksichtigung auch der geforderten Schwankungsbreite von ± 1,0 µm zu erreichen.

Zur Durchführung des erfindungsgemäßen Verfahrens wird man vorteilhaft eine Ofenkonstruktion wählen, bei der die Erwärmung der Glasvorform in einem senkrecht angeordneten Ziehofen erfolgt. Die die Vorform mit Abstand umgebende Ofenwandung ist aufgeheizt und der die Vorform und im unteren Ofenbereich die Faser umgebende Ofenbereich ist mit einem Schutzgas gefüllt, das über gesonderte Gaszuführungen in den Ofenraum geblasen wird. Dabei ist eine erste Gaszufuhr am einführungsseitigen Ende des Ofenraumes und eine zweite am ausgangsseitigen Ende im Ziehzwiebelbereich vorgesehen. Die Gaszuführungen enden erfindungsgemäß in dem Ofenraum benachbarten Verteilkammern, die gleichzeitig Mischkammern für die Gaskomponenten sind. Diese konstruktive Ausführungsform unterscheidet sich wesentlich von der bekannten, bei der das Helium in wechselnder Zusammensetzung mit einem anderen Schutzgas ausschließlich von oben her in den Ofenraum eingeführt und von dort in Ziehrichtung zum Ziehzwiebelbereich der Vorform umgelenkt wird. Die erfindungsgemäßen Maßnahmen erlauben eine erhebliche Vergleichmäßigung der Gasströmungen im Ofenbereich. Die gleichzeitig als Mischkammern für die Gaskomponenten eingesetzten Verteilkammern führen zu einer weiteren Verbesserung der Fertigungsparameter im die Vorform umschließenden Ofeninnenraum.

Von den Mischkammern ausgehend erfolgt die Gaszufuhr für den Ofenraum an seinem ausgangsseitigen Ende durch dort vorgesehene Gaszutritte, z. B. Ringdüsen, die vorteilhaft entgegen der Ziehrichtung geneigt sein können.

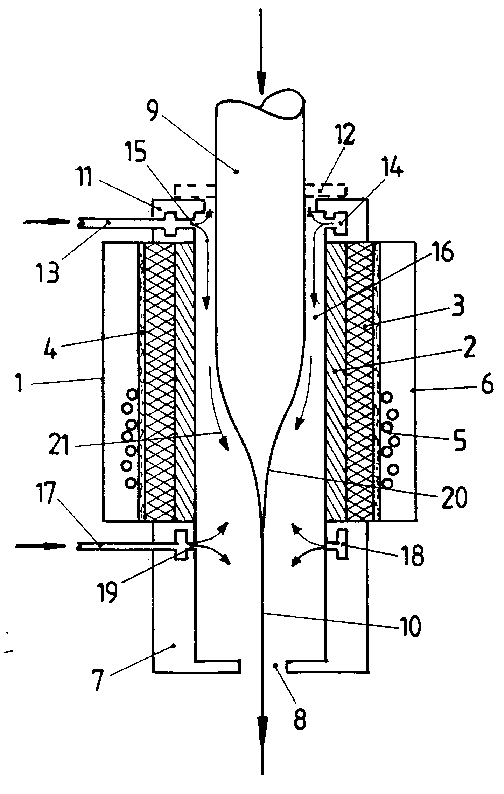

Die Erfindung sei anhand eines in der Figur schematisch dargestellten Faserziehofens näher erläutert.

Der hier als Beispiel herangezogene Ziehofen 1 besteht aus dem zylinderförmigen Suszeptor 2, einer nach außen anschließenden, ebenfalls zylinderförmigen Isolierung 3 sowie einem Quarzrohr 4. Der Suszeptor 2 sowie die Isolierung 3 bestehen im dargestellten Ausführungsbeispiel aus Graphit, der als Heizrohr wirkende Suszeptor 2 kann aber auch z. B. aus einem mit Yttrium stabilisierten Zirkonoxid bestehen. Dabei ist das Heizrohr (Suszeptor 2) als kurzgeschlossene Wicklung für die Induktionsspule 5 anzusehen. Nach außen abgeschlossen ist der Ziehofen durch eine konzentrische Außenwand 6 sowie den flanschartigen Boden 7 mit der ausgangsseitigen Öffnung 8 für den Durchtritt der aus der Vorform 9 gezogenen Faser 10.

Der zugehörige Ofendeckel ist mit 11 bezeichnet, eine vorzugsweise aus einem elastischen Material, etwa Silikongummi, bestehende Abdichtung 12 kann zur zusätzlichen Reduzierung von Gasleckagen in diesem Bereich verwendet werden.

Im Ofendeckel 11 ist die Gaszuführung 13 vorgesehen, eine umlaufende Verteilkammer 14 mit Auslaßdüsen 15 sorgt für einen vom Umfang her gleichmäßigen Gaszutritt in den durch die Oberfläche der Vorform 9 und den umgebenden Suszeptor 2 gebildeten Ringraum 16. Dabei bildet der andere Bereich dieses Ringraumes mit dem einströmenden Ofengas ohne oder mit nur geringem Anteil Helium eine zum einführungsseitigen Ende des Ziehofens 1 hin gerichtete Gas-Pufferzone, die den Austritt von für die Qualität der Faser 10 wesentlichem Heliumgas verhindert.

Die für den eigentlichen Faserziehvorgang wesentliche Heliumzufuhr erfolgt über die Gaszuführung 17, das hier eingeführte Gas sorgt für die geforderte Faserqualität und Konstanz der äußeren Faserabmessungen. Eine Verteilkammer 18, in Umfangsrichtung verlaufend und entsprechende Gasaustritte (Gasdüsen) 19 sorgen für eine gleichmäßige Gaszufuhr in dem Bereich der ziehzwiebel 20 der Vorform 9. Je nach Lage des Ziehzwiebelbereiches kann es sich als vorteilhaft erweisen, die Gasaustritte 19 entgegen der Faserziehrichtung zu schwenken, also z. B. schräg nach oben weisend anzuordnen.

Die in der Figur eingezeichneten Pfeile 21 verdeutlichen lediglich den grundsätzlichen Strömungsverlauf des Ofengases. Entscheidend dabei ist, daß über die Gaszuführung 13 ein Gasgemisch z. B. aus Helium/Argon im Verhältnis 15 %/85 % und gleichzeitig über die Gaszuführung 17 z. B. ein Gasgemisch aus Helium/Argon im Verhältnis 95 %/5 % eingebracht wird. Aufgrund der schematisch dargestellten Strömungsverhältnisse im Ofenraum sowie des überwiegend aus Argon bestehenden, über die Gaszuführung 13 eingebrachten Gases, wird sich hier im die Vorform 9 sowie die Faser 10 umschließenden Ringraum 16 ein von oben nach unten zunehmender Heliumgehalt einstellen, der z. B. im Ziehzwiebelbereich 20 bei 25 % bis 30 % vom Ofengas liegt.

Die Erfindung ist selbstverständlich nicht auf die dargestellte Ofenbauform beschränkt. Beliebige andere Ausführungsformen sind möglich, sofern sie eine Grundeinstellung für das Ofengas während des Faserziehprozesses zulassen, die unterschiedliche Heliumgehalte im Bereich Vorform 9/optische Faser 10 gewährleistet. Das Heliumgas trägt wegen seiner geringen Wärmekapazität wesentlich zur Vermeidung von Turbulenzen im Ofenraum bei. Mit diesem Gas wird daher der für die Entstehung der Faser 10 wesentliche Ziehzwiebelbereich 20 unmittelbar beeinflußt, während der obere Ofenraum mit einem Gas mit nur geringem oder auch keinem Heliumanteil beaufschlagt wird, so daß die bisher vorhandenen Heliumverluste beim Einführen des Heliumgases von oben her in einen Bereich des Ofens, für den speziell das Helium seine positive Wirkung auf den Ziehprozeß nicht entfalten kann, vermieden sind. Das erfindungsgemäße Verfahren erlaubt daher einen besonders wirtschaftlichen Fertigungsprozeß.

## Patentansprüche

1. Verfahren zum Ziehen einer optischen Faser (10) aus dem einen Ende einer mindestens in diesem Bereich über die Glaserweichungstemperatur erwärmten Glasvorform (9), wobei die Vorform (9) während des Ziehvorganges und Nachführens in einem Ofenraum (16) von einem Gas (21) umströmt wird, dadurch gekennzeichnet, daß die sich an das ziehseitige Ende (20) anschließenden Bereiche der Vorform (9) während des Nachführens Gaszonen mit in Ziehrichtung ansteigendem Heliumgehalt des Ofengases (21) durchlaufen.

2. Verfahren nach Anspruch 1, dadurch gekennzeichnet, daß der Heliumgehalt des in den Ofenraum (16) in einem ersten Zuführungsbereich (13, 15) einströmenden Gases auf weniger als 30 % und der Gehalt des in den Ofenraum (16) in einem in Ziehrichtung weiteren Zuführungsbereich (17, 19) auf mehr als 60 % ansteigt.

3. Verfahren nach Anspruch 1, dadurch gekennzeichnet, daß der Heliumgehalt des in den Ofenraum (16) in einem ersten Zuführungsbereich (13, 15) einströmenden Gases auf weniger als 15 % und der Gehalt des in den Ofenraum (16) in einem in Ziehrichtung weiteren Zuführungsbereich (17, 19) auf mehr als 85 % ansteigt.

4. Verfahren nach Anspruch 1 oder einem der folgenden, dadurch gekennzeichnet, daß der Heliumgehalt des die Vorform (9) umgebenden Ofengases (21) weniger als 30 % beträgt.

5. Verfahren nach Anspruch 1 oder einem der folgenden, dadurch gekennzeichnet, daß Helium in Verbindung mit einem anderen Schutzgas, wie Argon, Stickstoff o.ä. verwendet wird.

6. Verfahren nach Anspruch 1 oder einem der folgenden, bei dem das Ofengas (21) aus einem Argon/Heliumgemisch besteht, dadurch gekennzeichnet, daß in das einführungsseitige Ende des Ofenraumes (16) zwischen 2 und 5 l/min Argon sowie 0,3 bis 1,3 l/min Helium und am ausgangsseitigen Ende 0 bis 0,2 l/min Argon sowie zwischen 0,25 und 0,7 l/min Helium eingebracht werden.

7. Anordnung zur Durchführung des Verfahrens nach Anspruch 1 oder einem der folgenden, bei dem die Erwärmung der Vorform in einem senkrecht angeordneten Ziehofen erfolgt, dessen die Vorform mit Abstand umgebende Wandung aufgeheizt und der die Vorform/Faser umgebende Ofenbereich mit einem Schutzgas gefüllt ist, das über gesonderte Gaszuführungen in den Ofenraum geblasen wird, wobei eine erste Gaszufuhr (13) am einführungsseitigen Ende des Ofenraumes (16) und eine zweite (17) am ausgangsseitigen Ende im Ziehzwiebelbereich (20) vorgesehen ist, dadurch gekennzeichnet, daß die Gaszuführungen (13, 17) in dem Ofenraum (16) benachbarten Verteilkammern (14, 18) enden, die gleichzeitig Mischkammern für die Gaskomponenten sind.

## Claims

1. A process for drawing an optical fibre (10) from one end of a glass preform (9) heated at least in this area to above the softening point of glass, wherein gas (21) flows around the preform (9) in a furnace chamber (16) during the drawing process and the post-drawing stage, characterised in that, during the post-drawing stage, the areas of the preform (9) adjoining the drawn end (20) pass through gas zones in which the helium content of the furnace gas (21) increases in the drawing direction.

2. A process according to claim 1, characterised in that the helium content of the gas flowing into the furnace chamber (16) in a first feed area (13, 15) increases to below 30 % and the content in the next feed area (17, 19) of the furnace chamber (16) in the drawing direction increases to more than 60 %.

3. A process according to claim 1, characterised in that the helium content of the gas flowing into the furnace chamber (16) in a first feed area (13, 15) increases to below 15 % and the content in the next feed area (17, 19) of the furnace chamber (16) in the drawing direction increases to more than 85 %.

4. A process according to claim 1 or any subsequent claim, characterised in that the helium content of the furnace gas (21) surrounding the preform (9) is less than 30 %.

5. A process according to claim 1 or any subsequent claim, characterised in that helium is used in conjunction with another protective gas, such as argon, nitrogen or the like.

6. A process according to claim 1 or any subsequent claim, in which the furnace gas (21) consists of an argon/helium mixture, characterised in that between 2 and 5 l/min of argon and 0.3 to 1.3 l/min of helium are introduced into the inlet end of the furnace chamber (16) and 0 to 0.2 l/min of argon and between 0.25 and 0.7 l/min of helium are introduced at the outlet end.

7. An arrangement for carrying out the process according to claim 1 or any subsequent claim, in which heating of the preform is effected in a vertically disposed drawing furnace, whose wall surrounding the preform at a distance therefrom is heated, the furnace area surrounding the preform/fibre being filled with a protective gas which is blown into the furnace chamber via separate gas supply lines, wherein a first gas supply line (13) is provided at the inlet end of the furnace chamber (16) and a second (17) is provided at the outlet end in the bulb area (20), characterised in that the gas supply lines (13, 17) end in distributing chambers (14, 18) adjacent the furnace chamber (16), said distributing chambers (14, 18) simultaneously constituting mixing chambers for the gas components.

## Revendications

1. Procédé de tirage d'une fibre optique (10) à partir de l'une des extrémités d'une préforme en verre (9) chauffée au moins dans cette zone à une température supérieure à la température de ramollissement du verre, un gaz (21) circulant autour de la préforme (9) pendant le processus de tirage et le guidage ultérieur dans une chambre de four (16), caractérisé en ce que les zones de la préforme (9) qui suivent l'extrémité côté tirage (20) traversent pendant le guidage ultérieur des zones de gaz avec une teneur en hélium du gaz (21) contenu dans le four qui augmente dans le sens du tirage.

2. Procédé selon la revendication 1, caractérisé en ce que la teneur en hélium du gaz pénétrant dans l'espace de four (16) dans une première zone d'alimentation (13, 15) s'élève à moins de 30 % et celle du gaz pénétrant dans l'espace de four (16) dans une autre zone d'alimentation (17, 19) dans le sens du tirage s'élève à plus de 60 %.

3. Procédé selon la revendication 1, caractérisé en ce que la teneur en hélium du gaz pénétrant dans l'espace de four (16) dans une première zone d'alimentation (13, 15) s'élève à moins de 15 % et celle du gaz pénétrant dans l'espace de four (16) dans une autre zone d'alimentation (17, 19) dans le sens du tirage s'élève à plus de 85 %.

4. Procédé selon la revendication 1 ou selon l'une des revendications suivantes, caractérisé en ce que la teneur en hélium du gaz (21) entourant la préforme (9) dans le four est inférieure à 30 %.

5. Procédé selon la revendication 1 ou selon l'une des revendications suivantes, caractérisé en ce que l'hélium est utilisé en combinaison avec un autre gaz protecteur tel que l'argon, l'azote ou similaire.

6. Procédé selon la revendication 1 ou selon l'une des revendications suivantes, dans lequel le gaz (21) contenu dans le four se compose d'un mélange d'argon et d'hélium, caractérisé en ce que l'on introduit par l'extrémité côté introduction de l'espace de four (16) entre 2 et 5 l/min d'argon et 0,3 à 1,3 l/min d'hélium, à l'extrémité côté sortie, de 0 à 0,2 l/min d'argon ainsi que 0,25 à 0,7 l/min d'hélium.

7. Dispositif pour réaliser le procédé selon la revendication 1 ou selon l'une des revendications suivantes, dans lequel la préforme est chauffée dans un four de tirage disposé verticalement dont les parois entourant la préforme à une certaine distance sont chauffées et dont la zone de four entourant la préforme/ la fibre est remplie d'un gaz protecteur qui est introduit dans l'espace de four par l'intermédiaire d'arrivées de gaz séparées, une première arrivée de gaz (13) étant prévue à l'extrémité côté introduction de l'espace de four (16) et une deuxième arrivée (17) étant prévue à l'extrémité côté sortie dans la zone du cône de tirage (20), caractérisé en ce que les arrivées de gaz (13, 17) se terminent dans des chambres de distribution (14, 18) voisines de l'espace de four (16) qui sont en même temps des chambres de mélange des composants gazeux.
